# EUROPÄISCHE PATENTSCHRIFT

(11) **EP 0 802 241 B1**
(45) Veröffentlichungstag und Bekanntmachung des Hinweises auf die Patenterteilung: **17.07.2002**
(21) Anmeldenummer: 97105720.3
(22) Anmeldetag: 07.04.1997
(51) Int. Cl.: C09C 3/04, B01J 2/28

(54) **Verfahren zur Herstellung von Brikettier- und Pressgranulaten**
Process for preparing carbon black granules by briquetting and by compaction
Procédé de préparation de granulés de noir de carbone par briquetage et par compaction

(30) Priorität: 18.04.1996 DE 19615261; 18.09.1996 DE 19638042
(43) Veröffentlichungstag der Anmeldung: 22.10.1997
(60) Teilanmeldung: 01127372.9
(73) Patentinhaber: BAYER AG, 51368 Leverkusen (DE)
(72) Erfinder: Linde, Günter, Dr., 47800 Krefeld (DE); Schmidt-Park, Olaf, Dr., 47800 Krefeld (DE); Eitel, Manfred, Dr., 47906 Kempen (DE); Steiling, Lothar, Dr., 51373 Leverkusen (DE)

(56) Entgegenhaltungen:
- EP-A- 0 365 046
- EP-A- 0 424 896
- EP-A- 0 482 450
- EP-A- 0 567 882
- EP-A- 0 606 592
- EP-A- 0 651 031
- DE-A- 3 132 303
- DE-A- 4 336 548
- DE-A- 4 345 168
- DE-B- 1 807 714

## Beschreibung

Die vorliegende Erfindung betrifft ein Verfahren zur Herstellung von Brikettierund Preßgranulaten sowie ein Verfahren zum Einfärbung von Baustoffen wie Beton und Asphalt und von organischen Medien wie Lacksystemen, Kunststoffen und Farbpasten.

Die Verarbeitung von Pigmentgranulaten verlangt zur Erzielung des optimalen Farbeindrucks ein Aufmahlen der Pigmente zu Primärteilchen. Die dadurch entstehenden Pulver stauben sehr stark und neigen aufgrund ihrer Feinteiligkeit zu Adhäsion und Kleben in Dosieranlagen. Bei toxikologisch gefährlichen Stoffen müssen deshalb bei der Verarbeitung Maßnahmen zur Vermeidung einer Gefährdung von Mensch und Umwelt durch entstehende Stäube getroffen werden. Aber auch bei unbedenklichen inerten Stoffen wie z.B. Eisenoxidpigmenten ist eine Vermeidung von Staubbelästigung zunehmend vom Markt gewünscht.

Staubvermeidung und verbesserte Dosierung aufgrund guter Fließeigenschaften zur Erzielung eines qualitativ gleichmäßigen Farbeindrucks bei der Anwendung in Baustoffen und organischen Medien ist deshalb das Ziel im Umgang mit Pigmenten. Dieses Ziel wird mehr oder weniger durch Anwendung von Granulationsverfahren auf Pigmente erreicht. Dabei werden Aufbau- oder Sprühgranulation im allgemeinen angewendet. Kompaktierverfahren sind bisher wegen der eingeschränkten Dispergierbarkeit der dadurch erhaltenen Granulate weniger geeignet.

Grundsätzlich werden bei Pigmenten vom Markt zwei sich in der Richtung gegensätzliche Eigenschaften beim Einsatz von Pigmentgranulaten gefordert: mechanische Stabilität des Granulats und gute Dispergiereigenschaften. Die mechanische Stabilität ist verantwortlich für gute Transporteigenschaften sowohl bei Transport zwischen Hersteller und Anwender als auch für gute Dosierung und Fließeigenschaften beim Einsatz der Pigmente. Sie wird durch hohe Haftkräfte bewirkt und hängt z.B. von Bindemittelmenge oder auch vom Preßdruck beim Verformen ab. Andererseits wird die Dispergierbarkeit durch eine gute Mahlung vor der Granulierung (Naß- und Trockenmahlung), die mechanische Energie bei der Einarbeitung (Scherkräfte) und Dispergierhilfsmittel beeinflußt, die die Haftkräfte im trockenen Granulat bei der Einarbeitung in ein Medium sofort herabsetzen. Allerdings ist bei Pigmenten die Anwendung von größeren Mengen Dispergierhilfsmittel wegen des Kostenverhältnisses Zusatz/Pigment eingeschränkt. Außerdem bewirkt ein hoher Zusatzanteil eine entsprechende Herabsetzung der Farbstärke bzw. des Streuvermögens. Da die Farbstärkeschwankungen im allgemeinen unter ±5 % liegen, ist auch der Einsatz von Zusatzstoffen begrenzt, selbst wenn diese gleichzeitig als Haftvermittler und Dispergierhilfsmittel wirken. Auch dürfen die Zusätze nicht die Gebrauchseigenschaften der Endprodukte, wie z.B. Baustoffe, Kunstoffe und Lacke nachteilig verändern, beispielsweise bei Beton die Festigkeit oder das Erstarrungsverhalten, bei Asphalt die Druckfestigkeit oder Abriebfestigkeit und bei Kunststoffen die Festigkeit oder die Kerbschlagzähigkeit, bei Elastomeren (Polymeren) die elastischen Eigenschaften.

Nach dem Stand der Technik kommen als Herstellungsverfahren für Pigmentgranulate Sprühgranulation (Sprühtrocknung über Scheibe oder Düse) und Aufbaugranulation (Mischer, Wirbelschichtgranulator, Teller bzw. Trommel) in Frage.

Die Sprühtrocknungs-Granulation geht von Pigmentsuspensionen unter Verwendung von Bindemitteln aus. Entsprechende Verfahren sind in verschiedenen Schutzrechten beschrieben. Dabei werden wasserlösliche Bindemittel verwendet. So wird in DE-A 3 619 363, EP-A 0 268 645 und EP-A 0 365 046 von organischen Substanzen wie z.B. Ligninsulfonaten, Formaldehydkondensaten, Gluconsäuren, sulfatierten Polyglykolethern ausgegangen, während gemäß DE-A 3 918 694 und US-A 5 215 583 von anorganischen Salzen wie z.B. Silikat und Phosphat ausgegangen wird. Auch eine Kombination von Sprüh- und Aufbaugranulation ist in EP-A 0 507 046 beschrieben worden. In DE-A 3 619 363 (Spalte 3, Zeile 44-47) und EP-A 0 268 645 (Spalte 7, Zeile 18, 19) wird die Anwendung eines Kompaktierverfahrens ausgenommen. Bei diesem Verfahren wird durch Anwendung von Druck ein starker Zusammenhalt der Teilchen erreicht, so daß zwar eine gute Transportstabilität aber auch gleichzeitig erniedrigte Dispergiereigenschaften bewirkt werden.

In EP-A 0 257 423 und DE-A 3 841 848 wird die Sprühgranulation unter Verwendung von Polyorganosiloxanen als hydrophobe, lipophile Zusatzstoffe beschrieben. Die hydrophobierende Nachbehandlung führt bei sprühgranulierten Produkten zu einem sehr guten, fließenden, aber außerordentlich stark staubenden Granulat, das zudem schlecht mit Wasser benetzbar ist.

EP-A 0 424 896 offenbart die Herstellung von staubarmen Feingranulaten in einem Herstellungsgang in bekannten Intensivmischern. Es wird hierbei ein niedriger Gehalt an Wachsen in Kombination mit Emulgator und Netzmitteln durch Aufbringen einer wäßrigen Dispersion angewendet. Dabei werden im allgemeinen Wassergehalte von 20 bis über 50 % erhalten. Diese Granulate müssen zunächst getrocknet und von Über- und Unterkorn getrennt werden.

DE-A 31 32 303 beschreibt staubarme, fließfähige anorganische Pigmentgranulate, die mit unter Wärmeeinwirkung flüssigwerdenden Bindemitteln gemischt und durch einen Siebvorgang unter Anwendung von Siebhilfe (Druck) granuliert werden. Dabei fällt ca. 10 bis 20 % des Durchsatzes als Feinanteil <0,1 mm an.

Aus EP-A 0 144 940 gehen staubarme Pigmentgranulate hervor, die ausgehend von Filterschlamm mit ca. 50 % Wasser durch Zugabe von 0,5-10 % oberflächenaktiven Stoffen und zusätzlich Mineralöl oder flüssigwerdenden Wachsen bei 50 bis 200°C gemischt werden bis zum Schmierpunkt. Der Vorgang erfolgt in Intensivmischern, eventuell wird noch nachgranuliert und nachgetrocknet. Im Endprodukt liegt Wasser in einer Menge von 10 bis 15 % vor, was für die Einarbeitung in Kunststoffen nachteilig ist.

Auch andere Verfahren sind in ihrer Anwendung eingeschränkt. Die Sprühgranulation erfordert wegen der Tropfenbildung die Verwendung von gut fließfähigen, also dünnflüssigen Suspensionen. Für den Trocknungsvorgang ist somit eine größere Menge an Wasser zu verdampfen als bei der häufig einsetzbaren Wirbelschichttrocknung aus hochausgepreßten Pigmentfilterpasten. Dies führt zu höheren Energiekosten. Bei zuvor durch Kalzination hergestellten Pigmenten bedeutet die Sprühgranulation einen zusätzlichen Verfahrensschritt mit hohen Energiekosten. Außerdem fällt bei der Sprühgranulation ein mehr oder weniger großer Anteil an Feinmaterial im Staubfilter an, der wieder in die Produktion zurückgeführt werden muß.

Die Aufbaugranulation weist häufig auch Nachteile auf. Sie kann - ausgehend von Pigmentpulver - in Mischern unter hoher Turbulenz, im Wirbelschichtverfahren oder auch durch Teller- und Trommelgranulation durchgeführt werden. Allen diesen Verfahren gemeinsam ist, daß der Bindemittelbedarf, meistens Wasser, groß ist, so daß als zusätzlicher Verfahrensschritt eine Trocknung nachfolgen muß. Auch werden hierbei Granulate unterschiedlicher Größe erhalten, insbesondere, wenn nicht ausreichend Bindemittel für die Pulvermenge zur Verfügung steht oder die aktuelle Verteilung nicht optimal ist. Dann kann ein gewisser Anteil als Granulat zu groß werden, während andererseits zu kleine und damit noch staubende Anteile vorliegen. Deshalb ist eine Klassierung der entstehenden Granulate mit einem Rücklauf von Über- und Unterkorn erforderlich.

Die Tellergranulation führt zu einem breiten Teilchengrößenspektrum von Granulaten. Wo dies wegen der schlechten Dispergierbarkeit zu großer Teilchen nicht erwünscht ist, muß durch intensive personelle Überwachung der Granuliervorgang verfolgt werden und durch manuelle Steuerung der Keimmenge die Granulatherstellung optimiert werden. Üblicherweise erfolgt auch hierbei eine Klassierung mit Rückführung des Über- und Unterkorns.

Extrusionsverfahren aus Pasten führen bei der Trocknung zu relativ festen Granulaten, die auch wegen ihrer Größe keine optimale Dispergierbarkeit gewährleisten.

Aus DE-A 42 14 195 ist ein Verfahren zur Einfärbung von Asphalt mit anorganischen Pigmentgranulaten beschrieben, wobei Öle als Bindemittel verwendet werden. Es handelt sich hierbei um ein einfaches Granulationsverfahren.

In DE-A 4 336 613 und DE-A 4 336 612 werden anorganische Pigmentgranulate aus Pigmenten durch Abmischung mit Bindemitteln, Kompaktierung, Schroten und Aufgranulierung hergestellt. Diese so hergestellten Granulate sind schlecht pneumatisch förderbar; bei der Förderung entsteht viel Staub, was unerwünscht ist.

Aufgabe der vorliegenden Anmeldung war es daher, ein Verfahren zur Verfügung zu stellen, das die bisher beschriebenen Nachteile der Sprühgranulation, der Extrusionsgranulation oder der Aufbaugranulation in ihrer Anwendung auf anorganische Pigmente, insbesondere Rußpigmente vermeidet und ausreichend stabile, dosierfähige, staubarme Granulate von möglichst gleich guter Dispergierbarkeit wie die bisher verwendeten Pulver zur Verfügung stellt.

Es wurde nun gefunden, daß diese Aufgabe durch eine mehrstufige Kombination der Verfahrensschritte Mischen, Kompaktieren, Trennen und gegebenenfalls Abrunden gelöst werden kann.

Gegenstand der Erfindung ist ein Verfahren zur Herstellung von Preß- oder Brikettiergranulaten aus Rußpigmenten mit Hilfsmitteln, welches dadurch gekennzeichnet ist, daß
a) ein oder mehrere Rußpigmente mit einem oder mehreren die Verarbeitbarkeit fördernden Hilfsmitteln vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 µm und 1000 µm, liegen, als Produkt entnommen wird und gegebenenfalls in einem weiteren Schritt gerundet wird, die andere Fraktion bzw. Fraktionen aus dem Prozeß ausgeschleust oder zurückgeführt werden.

Vor dem Schritt c) kann das gepreßte oder brikettierte Produkt vorzugsweise in zwei Fraktionen aufgetrennt werden (Zwischenschritt x), um dann die grobe Fraktion, in der mindestens 85 % der Teilchen größer 500 µm, bevorzugt 600 µm, sind, im Schritt c) zu zerkleinern und die andere, feine Fraktion im Schritt d) getrennt von oder zusammen mit dem Produkt aus Schritt c) abermals in zwei oder mehrere Fraktionen aufzutrennen.

Bevorzugt wird lediglich die feine Fraktion aus Zwischenschritt x) in zwei oder mehrere Fraktionen im Schritt d) aufgetrennt, während die grobe Fraktion aus Zwischenschritt x) im Schritt c) zerkleinert wird und dann als Produkt aus dem Prozeß ausgeschleust wird.

Der Zwischenschritt x kann bevorzugt durch Sichten oder Sieben (mechanisches Trennen) erfolgen. Vorzugsweise werden Siebmaschinen eingesetzt.

Besonders bevorzugt wird das zerkleinerte Produkt in d) in zwei Fraktionen aufgetrennt, wobei der Feinanteil kleiner 80 µm ausgeschleust oder in den Prozeß zurückgeführt wird und die grobe Fraktion größer 80 µm gegebenenfalls in einem weiteren Schritt gerundet wird.

Das zerkleinerte Produkt kann auch vorzugsweise in drei Fraktionen in Schritt d) aufgetrennt werden, wobei der Feinanteil und der Grobanteil aus dem Prozeß ausgeschleust oder in den Prozeß zurückgeführt werden und die mittlere Fraktion zwischen 80 und 2 000 µm, besonders bevorzugt zwischen 100 und 1000 µm, ganz besonders bevorzugt zwischen 100 und 500 µm, gegebenenfalls in einem weiteren Schritt gerundet wird.

Die Granulate weisen bevorzugt einen Restwassergehalt von unter 4 Gew.-% auf, besonders bevorzugt unter 2 Gew.-%. Dieser kann gegebenenfalls durch Nachtrocknung erhalten werden.

Der Rundungsschritt unter e) wird bevorzugt unter Entfernung des Staubanteils durchgeführt.

Das nach dem Runden unter Schritt e) entstandene Produkt kann vorzugsweise noch mit Hilfsmitteln beschichtet werden.

Wird ein Rundungsschritt unter e) durchgeführt, so kann danach bevorzugt ein Grobanteil mit Teilchengrößen >1 500 µm abgetrennt und gegebenenfalls in den Prozeß zurückgeführt werden.

Die Rußgranulate haben vorzugsweise Schüttdichten von 0,1 bis 2,5 g/cm³.

Als Hilfsmittel können sowohl anorganische als auch organische Substanzen eingesetzt werden.

Als Hilfsmittel werden bevorzugt Wasser, Salze aus der Gruppe der Phosphate, Carbonate, Nitrate, Sulfate, Chloride, Silikate, Aluminate und Borate, Formiate, Oxalate, Zitrate und Tartrate, Polysaccharide, Cellulosederivate, wie z.B. Celluloseether, Celluloseester, Phosphonocarbonsäuren, modifizierte Silane, Silikonöle, Öle aus biologischem Anbau (z.B. Rapsöl, Sojabohnenöl, Maiskeimöl, Olivenöl, Kokosöl, Sonnenblumenöl), raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wäßrige Lösungen davon verwendet.

Zusätzlich können beim Mischen vorzugsweise Emulgatoren, Netzmittel und Dispergiermittel in einer Menge von 0,01 bis 5 Gew.-%, bevorzugt 0,01 bis 3 Gew.-%, bezogen auf das Gewicht der eingesetzten Pigmente, eingesetzt werden.

Als Emulgatoren kommen insbesondere Emulgatoren mit HLB-Werten von 7 bis 40, insbesondere von bis 18, für den Einsatz in Baustoffen mit wäßrigen Systemen wie z.B. Beton in Frage bestehend aus Alkyl-, Acryl-Resten und hydrophilen Zwischen- und Endgruppen wie z.B. Amide, Amine, Ether, Hydroxyl, Carboxylat, Sulfat, Sulfonat, Phosphat, Amin-Salz, Polyether, Polyamid, Polyphosphat. Die Substanzen können entsprechend ihrem HLB-Wert einzeln oder in Kombination eingesetzt werden.

Als Netzmittel sind besonders Alkylbenzolsulfonate, Fettalkoholsulfate, Fettalkoholethersulfate, Fettalkoholethoxylat, Alkylphenolethoxylat, Alkan-, Olefinsulfonate geeignet.

Als Dispergierhilfsmittel werden vorzugsweise Melaminsulfonate, Naphthalinsulfonate, Metallseifen, Polyvinylalkohole, Polyvinylsulfate, Polyacrylamide, Fettsäuresulfate eingesetzt.

Zur Erhöhung der Stabilität bzw. als Hilfe bei der Verarbeitung der Granulate kann es günstig sein, die Granulate abschließend mit einer zusätzlichen Schicht zu umhüllen. Diese Schicht kann durch Aufbringen von anorganischen Salzen in Lösung, von Polyolen, Ölen oder Wachsen bzw. Polyethern, Polycarboxylaten oder Cellulosederivaten, bevorzugt Carboxymethylcellulose, erzeugt werden.

Den Granulaten können auch beim Mischen zusätzlich Konservierungsstoffe in einer Konzentration von 0,01 bis 1 Gew.-% bezogen auf das Gewicht des Pigments zugesetzt werden. Als Beispiele seien Formaldehyd-abspaltende Verbindungen, phenolische Verbindungen oder Isothiazolinon-Zubereitungen genannt.

Überraschenderweise können für die Preß- und Brikettiergranulate, insbesondere wenn diese für die Einarbeitung in wäßrige Baustoffsysteme wie Zementmörtel oder Beton bestimmt sind, nicht nur in Wasser lösliche Substanzen als Hilfsmittel eingesetzt werden, sondern auch wasserunlösliche Substanzen, wie z.B. Öle.

Die Hilfsmittel werden bevorzugt in Mengen von 0,001 bis 10 Gew.-%, besonders bevorzugt von 0,01 bis 5 Gew.-%, ganz besonders bevorzugt von 0,1 bis 3 Gew.-%, bezogen auf eingesetztes Pigment eingesetzt.

Die Hilfsmittel können bevorzugt in Verbindung mit weiteren Additiven wie z.B. Emulgatoren, Netzmitteln, Metallseifen usw. eingesetzt werden.

Der Preß- oder Brikettierschritt b) erfolgt bevorzugt über eine Walzenpresse oder Matrizenpresse und vorzugsweise bei Linienkräften von 0,1 bis 50 kN/cm, bevorzugt 0,1 bis 20 kN/cm.

Beim Pressen oder Brikettieren (Kompaktieren, Schritt b)) ist eine wichtige Kennziffer die Preßkraft (kN) pro cm Walzenbreite (Linienkraft). Beim Kompaktieren zwischen Walzen wird von einer linienförmigen Übertragung der Preßkraft ausgegangen, da eine Preßfläche nicht definiert werden kann und deshalb kein Druck (kN/cm²) berechenbar ist.

Die Kompaktierung erfolgt bevorzugt bei niedrigen Linienkräften. Die angewendeten Linienkräfte liegen im allgemeinen vorzugsweise im unteren Bereich der kommerziell erhältlichen Geräte bevorzugt, zwischen 0,1 und 50 kN/cm. Ganz besonders bevorzugt betragen die Linienkräfte 0,1 bis 20 kN/cm. Kommerziell erhältliche Geräte sind z.B. der Pharmapaktor 200/50 der Firma Bepex GmbH, Leingarten/Deutschland.

Der zusätzliche Trennungsschritt x) erfolgt vorzugsweise mit Siebmaschinen, wie z.B. Trommelsiebe, Schwingsiebe und Vibrationssiebe.

Die Zerkleinerung kann über alle marktüblichen Zerkleinerungsaggregate, wie Brecher, Stachelwalzen, Walzen mit Friktionsvorrichtungen und Siebgranulatoren erfolgen.

Der Zerkleinerungsschritt c) erfolgt vorzugsweise mit Siebgranulatoren oder Siebmühlen, bei denen das Material durch ein Passiersieb mit einer Maschenweite von 0,5 bis 4 mm, besonders bevorzugt von 0,5 bis 2,5 mm, ganz besonders bevorzugt von 1 bis 2 mm gedrückt wird (sogenannte Schroter). Die Rotoren bewegen sich, wie allgemein bekannt, umlaufend oder oszillierend mit einer Umfangsgeschwindigkeit von 0,05 m/sec bis 10 m/sec, vorzugsweise 0,3 bis 5 m/sec. Der Abstand zwischen Rotor und Sieb oder Lochscheibe beträgt 0,1 bis 15 mm, bevorzugt 0,1 bis 5 mm, besonders bevorzugt 1 bis 2 mm.

Als Zerkleinerungsgerät kann z.B. der Flake Crusher der Firma Frewitt, Fribourg/Schweiz eingesetzt werden.

Nach dem Zerkleinern wird der Feinanteil unter 80 µm abgetrennt. Bevorzugt beträgt die Menge dieses Feinanteils 10 bis 50 Gew.-%, besonders bevorzugt 10 bis 30 Gew.-%. Der Feinanteil wird vorzugsweise in den Schritt b) zurückgeführt. Der übrigbleibende Anteil ist rieselfähig, dosierbar, stabil, staubarm und gut dispergierbar. Eine weitere Optimierung kann durch zusätzliches Abrunden erhalten werden.

Der Rundungsschritt unter e) erfolgt vorzugsweise auf einem Drehteller, in einer Drehtrommel oder Drageetrommel, Trommelsieben oder ähnlichen Aggregaten oder in einem Wirbelbett oder Fließbett oder in einer Siebanlage. Hierbei kann der Staubanteil vorzugsweise abgesaugt oder in der Wirbelschicht mit der Luft ausgetragen werden.

Das Verfahren gemäß DE-A 43 36 613 oder DE-A 43 36 612 führt durch die Aufbaugranulation auf dem Drehteller zu zwar runden Teilchen, die jedoch inhomogen sind. Sie bestehen aus einem kompakten Kern und einer aufgebauten äußeren Schicht bzw. Schichten, die abgerieben werden können. Diese Produkte sind daher insbesondere bei der pneumatischen Förderung staubend, und die Fließfähigkeit ist nicht besonders gut. Die nach dem erfindungsgemäßen Verfahren hergestellten Produkte haben diese Nachteile nicht, da sie aus homogenen Kompaktteilchen einheitlicher Dichte und Festigkeit bestehen.

Die nach dem erfindungsgemäßen Verfahren hergestellten Granulate werden zur Einfärbung von Baustoffen, wie z.B. Beton, Zementmörtel und Putze, und zur Einfärbung von organischen Medien, wie Lacken, Kunststoffen und Farbpasten und zur Herstellung von Dispersionsfarben und Slurries verwendet.

Besonders gut eignen sich die erfindungsgemäß hergestellten Granulate zur Einarbeitung in trockene Zementmörtelmischungen und in Putze.

Wesentlich bei dem erfindungsgemäßen mehrstufigen Verfahren ist, daß im ersten Schritt ein ausreichend kohäsives homogenes Material durch Zugabe des Hilfsmittels in einem Mischer erzeugt wird. Im zweiten Schritt erfolgt dann die Brikettierung oder Pressung.

Ein weiterer Gegenstand der Erfindung ist ein Verfahren zur Einfärbung von Baustoffen wie Beton mit Rußpigmenten, welches dadurch gekennzeichnet ist, daß Brikettier- oder Preßgranulate aus Rußpigmenten und Hilfsmitteln, die nach dem erfindungsgemäßen Verfahren hergestellt wurden, mit dem Baustoff in einer Menge von 0,1 bis 10 Gew.-%, bevorzugt 1 bis 5 Gew.-%, bezogen auf Zement, vermischt werden.

Die erfindungsgemäß hergestellten Granulate können auch bevorzugt in Dispersionsfarben und Slurries eingesetzt werden.

Ein weiterer Gegenstand der Erfindung ist ein Verfahren zur Einfärbung von organischen Medien wie Lacksysteme, Kunststoffe und Farbpasten mit Rußpigmenten, welches dadurch gekennzeichnet ist, daß Brikettier- oder Preßgranulate aus Rußpigmenten, die nach dem erfindungsgemäßen Verfahren hergestellt wurden, mit dem organischen Medium in einer Menge von 0,1 bis 10 Gew.-%, bezogen auf organisches Medium, vermischt werden.

Die Prüfung der Dispergierbarkeit für Baustoffe erfolgt in Zementmörtel über die Farbstärkemessung an mit Weißzement hergestellten Prismen:

Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 l-Mischschüssel, Bauform 155l, Drehzahl 140 U/min, Ansatz: 500 g Zement. Nach 100 s werden 3 Mischungsproben (300 g) entnommen und Probekörper (5 x 10 x 2,5 cm) unter Druck hergestellt (300 bar). Härtung der Probekörper: 24 Std. bei 30°C und 95 % rel. Luftfeuchte mit anschließendem Trocknen 4 Stunden bei 60°C. Farbdatenmessung über Dataflash 2000 Datacolor International, Köln, 4 Meßpunkte je Stein, pro Pigmentmischung 12 Meßpunkte. Die erhaltenen Mittelwerte werden verglichen mit den Werten einer Referenzprobe. Beurteilt werden der Farbabstand E_{ab} und die Farbstärke (Referenzprobe = 100 %) (DIN 5033, DIN 6174). Die Dispergierbarkeit wird als gut bezeichnet bei einem Farbstärkenunterschied bis 5 % gegenüber der Referenzprobe, als befriedigend bei einem Unterschied bis 10 %.

Die Prüfung des Fließverhaltens erfolgt durch Beurteilung des Auslaufverhaltens aus einem Trichter mit 100 ml Volumen mit 6 mm Öffnung in Anlehnung an ASTM-Test D 1200-88. Das Fließverhalten wird als gut bezeichnet, wenn das Material frei ausläuft. Erfolgt kein Materialfluß bzw. ein Fließen nur nach Klopfen, wird das Fließverhalten als nicht ausreichend betrachtet.

Die Bestimmung des Feinanteils als Siebrückstand erfolgt auf einem VA-Sieb nach DIN 4188 mit 80 µm Maschenweite auf einer Luftstrahlsiebmaschine Typ Alpine 200 LS. Es werden 20 g der zu prüfenden Probe eingesetzt. Das Feingut wird während einer Laufzeit von 5 Minuten abgesaugt und die Menge des Grobanteils auf dem Sieb zurückgewogen.

Die Prüfung der Kunststoffdispergierbarkeit erfolgt nach einer der DIN 53 775, Teil 7 angenäherten Vorschrift: "Prüfung von Farbmitteln in weichmacherhaltigen Polyvinylchlorid (PVC-P) Formmassen; Bestimmung der Dispergierhärte durch Walzen".

Das zu prüfende Pigment wird bei 160 ± 5°C auf einem Mischwalzwerk in PVC dispergiert. Das erhaltene Walzfell wird geteilt und die eine Hälfte anschließend durch Walzen bei Raumtemperatur erhöhten Scherkräften ausgesetzt. Als Maß für die Dispergierbarkeit gilt bei Buntpigmenten der Farbabstand ΔE nach CIELAB (DIN 5033, 6174) zwischen heiß- und kaltgewalztem PVC-Fell, bzw. bei Weißpigmenten die Differenz der Normfarbwerte Y (DIN 5033) zwischen heiß- und kaltgewalztem PVC-Fell. Ein gut dispergierbares Pigment ist schon bei geringen Scherkräften ausdispergiert, während zum Ausdispergieren eines schwer dispergierbaren Pigments die erhöhten Scherkräfte beim Walzen bei tiefer Temperatur notwendig sind. Daher gilt: je kleiner der Farbabstand ΔE bzw. die Differenz der Normfarbwerte Y, desto besser ist das Pigment dispergierbar. Insbesondere bei Granulaten kommt der Dispergierbarkeit eine große Bedeutung zu, da zuerst die Granulatteilchen zerteilt werden müssen, die dann im Kunststoff zu dispergieren sind. Angestrebt wird für Granulate eine gleich gute Dispergierbarkeit wie die entsprechender Pigmentpulver, so daß die Kenngrößen ΔE bzw. Y für Pulver und Granulat nicht wesentlich differieren sollen.

Die Feinstaubmessung zur Erfassung der Festigkeit von Granulaten erfolgt in Anlehnung an DIN 55 992. Die Staubungseigenschaften des Granulates können mit dem Heubach "Dustmeter" gemessen werden. Der Austrag an Feinstaub aus einer rotierenden Trommel, durch die ein Luftstrom definierter Stärke strömt, wird an einem Glasfaserfilter gravimetrisch bestimmt. Durch Messungen nach unterschiedlichen Belastungszeiten kann auch der Verlauf der Staubentwicklung als Funktion mechanischer Beanspruchung aufgezeigt werden.

Im folgenden wird anhand von Beispielen die vorliegende Erfindung näher erläutert, ohne daß in diesen Beispielen eine Einschränkung zu sehen ist.

### Beispiel 1

500 g Ruß Corasol C 30 (Handelsprodukt der Fa. Degussa) bzw. 500 g Ruß Monarch 800 (Handelsprodukt der Fa. Cabot Corp.) wurden mit Ammoniumligninsulfonat und Maschinenöl V 100 in unterschiedlichen Mengen in einem Mischer 18 Minuten gemischt. Die Mischung wurde auf einem Kompaktierer Typ WP50N (Firma Alexanderwerk, Remscheid) mit unterschiedlichen Linienkräften gepreßt und danach in einem Feingranulator RFG (Fa. Alexanderwerk, Remscheid) mit einem Sieb einer Maschenweite von 1,5 mm zerkleinert. Das zerkleinerte Produkt wurde über ein Sieb mit einer Maschenweite von 250 µm in zwei Fraktionen aufgetrennt. Die Fraktion über 250 µm wurde getestet und zeigte eine gute Fließfähigkeit (das entsprechende Pulver hatte eine schlechte Fließfähigkeit). Die übrigen Daten der Fraktion sowie des Ausgangspulvers sind der Tabelle 1 zu entnehmen. Die relative Farbstärke in Beton wurde gegenüber dem entsprechenden Ausgangspulver gemessen. Außerdem wurde die relative Farbstärke in Beton auf den Pigmentgehalt im Granulat umgerechnet (theoretischer Wert).

### Beispiel 2

500 g Ruß Corasol C 30 (Handelsprodukt der Fa. Degussa) wurden mit 8 % Ammoniumligninsulfonat und 1 % Maschinenöl V 100 in einem Mischer 18 Minuten gemischt. Die Mischung wurde auf einem Kompaktierer Typ WP50N (Fa. Alexanderwerk, Remscheid) mit 7 kN/cm gepreßt und danach in einem Feingranulator RFG (Fa. Alexanderwerk, Remscheid) mit einem Sieb einer Maschenweite von 1,5 mm zerkleinert.

Ein Teil des zerkleinerten Produktes wurde über ein Sieb mit einer Maschenweite von 250 µm in zwei Fraktionen aufgetrennt. Die Fraktion über 250 µm (60 % der Menge) wurde getestet und zeigte eine gute Fließfähigkeit (das entsprechende Pulver hatte eine schlechte Fließfähigkeit).

Der andere Teil des zerkleinerten Produktes (ca. 150 g) inklusive des Feinanteils wurde in einer Trommel von 15 cm Durchmesser bei 60 Umdrehungen pro Minute 5 Minuten lang granuliert. Dabei wurde der Feinanteil zu 100 % aufgranuliert. Auch dieses Produkt zeigte eine gute Fließfähigkeit und eine ausreichende Dispergierbarkeit. Das Staubverhalten im Dustmeter nach Heubach war allerdings für die beiden Produkte deutlich unterschiedlich. Das kompaktierte, geschrotete und nachgranulierte Material wies 1328 mg Staub auf, während das kompaktierte, geschrotete, gesiebte und nicht nachgranulierte Material nur 548 mg Staub im Test entwickelte. Das Ausgangspulver Corasol C 30 entwickelte 2669 mg Staub im Dustmeter.

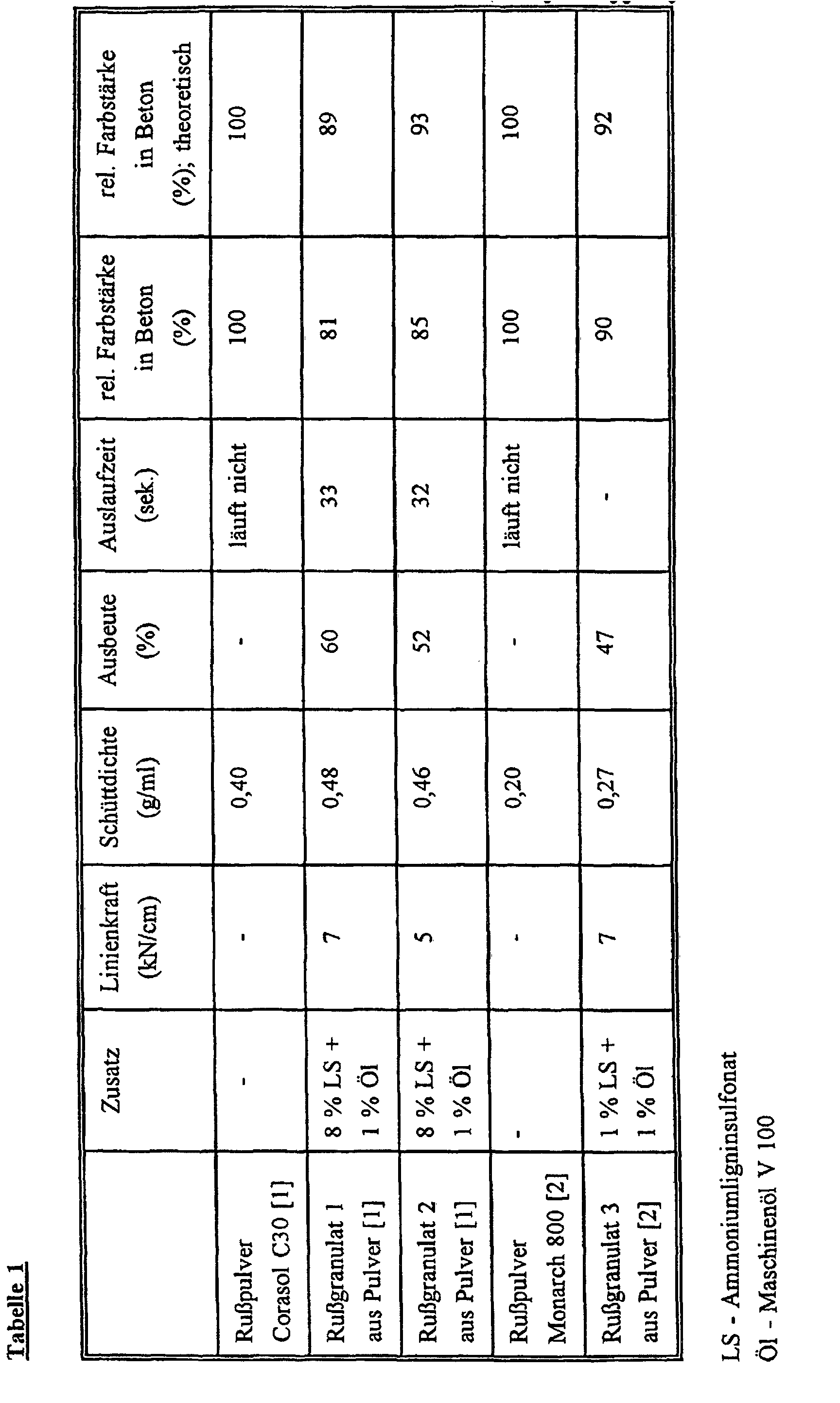

## Patentansprüche

1. Verfahren zur Herstellung von Preß- oder Brikettiergranulaten aus Rußpigmenten mit Hilfsmitteln, **dadurch gekennzeichnet, daß**
a) ein oder mehrere Rußpigmente mit einem oder mehreren die Verarbeitbarkeit fördernden Hilfsmitteln vermischt werden,
b) diese Mischung einem Preß- oder Brikettierschritt unterworfen wird,
c) dieses gepreßte oder brikettierte Produkt zerkleinert wird,
d) das zerkleinerte Produkt in zwei oder mehrere Fraktionen aufgetrennt wird,
e) die Fraktion, in der mindestens 85 % der Teilchen größer 80 µm, bevorzugt größer 100 µm, sind oder zwischen 80 und 2 000 µm, bevorzugt zwischen 100 und 1000 µm, liegen, als Produkt entnommen wird und gegebenenfalls in einem weiteren Schritt gerundet wird, die andere Fraktion bzw. Fraktionen aus dem Prozeß ausgeschleust oder zurückgeführt werden.

2. Verfahren gemäß Anspruch 1, **dadurch gekennzeichnet, daß** vor dem Schritt c) das gepreßte oder brikettierte Produkt aus b) in zwei Fraktionen aufgetrennt wird, die grobe Fraktion, in der mindestens 85 % der Teilchen größer 500 µm, bevorzugt größer 600 µm sind, in den Schritt c) gegeben und zerkleinert wird und die feine Fraktion in den Schritt d) gegeben wird, um im Schritt d) getrennt von oder zusammen mit dem Produkt aus Schritt c) aufgetrennt zu werden.

3. Verfahren gemäß Anspruch 1, **dadurch gekennzeichnet, daß** das zerkleinerte Produkt in d) in zwei Fraktionen aufgetrennt wird, wobei der Feinanteil kleiner 80 µm ausgeschleust oder in den Prozeß zurückgeführt wird und die grobe Fraktion größer 80 µm gegebenenfalls in einem nächsten Schritt gerundet wird.

4. Verfahren gemäß Anspruch 1, **dadurch gekennzeichnet, daß** das zerkleinerte Produkt in drei Fraktionen in Schritt d) aufgetrennt wird, wobei der Feinanteil und der Grobanteil ausgeschleust oder zurückgeführt werden und die mittlere Fraktion zwischen 80 und 2 000 µm gegebenenfalls in einem weiteren Schritt gerundet wird.

5. Verfahren gemäß einem oder mehreren der Ansprüche 1 bis 4, **dadurch gekennzeichnet, daß** der Rundungsschritt unter e) unter Entfernung des Staubanteils durchgeführt wird.

6. Verfahren nach einem oder mehreren der Ansprüche 1 bis 5, **dadurch gekennzeichnet, daß** das nach Schritt d) erhaltene Produkt oder gegebenenfalls das nach dem Runden unter Schritt e) entstandene Produkt mit Hilfsmitteln beschichtet wird.

7. Verfahren nach einem oder mehreren der Ansprüche 1 bis 6, **dadurch gekennzeichnet, daß** als Hilfsmittel Wasser, Salze aus der Gruppe der Phosphate, Silikate, Aluminate, Borate, Polysaccharide und Cellulosederivate, Öle aus biologischem Anbau, raffinierte Erdöle auf paraffinischer und/oder naphthenischer Basis, synthetisch hergestellte Öle, Alkylphenole, Glykole, Polyether, Polyglykole, Polyglykolderivate, Eiweißfettsäurekondensationsprodukte, Alkylbenzolsulfonate, Alkylnaphthalinsulfonate, Ligninsulfonat, sulfatierte Polyglykolether, Melaminformaldehydkondensate, Naphthalinformaldehydkondensate, Gluconsäure, Polyhydroxyverbindungen oder wäßrige Lösungen davon eingesetzt werden.

8. Verfahren nach einem oder mehreren der Ansprüche 1 bis 7, **dadurch gekennzeichnet, daß** die Hilfsmittel in Mengen von 0,001 bis 10 Gew.-%, bezogen auf eingesetztes Pigment eingesetzt werden.

9. Verfahren nach einem oder mehreren der Ansprüche 1 bis 8, **dadurch gekennzeichnet, daß** der Preß- oder Brikettierschritt b) über eine Walzenpresse oder Matrizenpresse und bei Linienkräften von 0,1 bis 50 kN/cm, bevorzugt 0,1 bis 20 kN/cm erfolgt.

10. Verfahren nach einem oder mehreren der Ansprüche 1 bis 9, **dadurch gekennzeichnet, daß** der Zerkleinerungsschritt c) durch Siebung über ein Passiersieb mit einer Maschenweite von 0,5 bis 4 mm, bevorzugt von 0,5 bis 2,5 mm, besonders bevorzugt von 1 bis 2 mm, erfolgt.

11. Verfahren nach einem oder mehreren der Ansprüche 1 bis 10, **dadurch gekennzeichnet, daß** der Rundungsschritt unter e) auf einem Drehteller, in einer Drehtrommel, in einer Siebanlage oder in einem Wirbelbett erfolgt.

12. Verfahren zur Einfärbung von Baustoffen mit Rußpigmenten, **dadurch gekennzeichnet, daß** Brikettier- oder Preßgranulate hergestellt gemäß den Ansprüchen 1 bis 11 mit den Baustoffen in einer Menge von 0,1 bis 10 Gew.-%, bezogen auf Zement vermischt werden.

13. Verfahren zur Einfärbung von organischen Medien mit Rußpigmenten, **dadurch gekennzeichnet, daß** Brikettier- oder Preßgranulate hergestellt gemäß den Ansprüchen 1 bis 11 mit den organischen Medien in einer Menge von 0,1 bis 10 Gew.-%, bezogen auf organisches Medium, vermischt werden.

## Claims

1. A process for producing pressed or briquetted granules of carbon black pigments comprising processing adjuvants, **characterised in that**
a) one or more carbon black pigments are mixed with one or more processing adjuvants which promote processability,
b) the mixture is subjected to a pressing or briquetting step,
c) the pressed or briquetted product is comminuted,
d) the comminuted product is separated into two or more fractions,
e) the fraction in which at least 85 % of the particles are larger than 80 µm, preferably larger than 100 µm, or are between 80 and 2000 µm, preferably between 10 and 1000 µm, is taken off as a product and is optionally rounded in a further step, whilst the other fraction or fractions is/are removed from the process or recycled.

2. A process according to claim 1, **characterised in that** before step c) the pressed or briquetted product from b) is separated into two fractions, the coarse faction in which at least 85 % of the particles are larger than 500 µm, preferably larger than 600 µm, is fed to step c) and comminuted, and the fine fraction is fed to step d) in order to be separated in step d), separately from or together with the product from step c).

3. A process according to claim 1, **characterised in that** the comminuted product in d), is separated into two fractions wherein the fine fraction less than 80 µm is removed or is recycled to the process and the coarse fraction larger than 80 µm is optionally rounded in a next step.

4. A process according to claim 1, **characterised in that** the comminuted product is separated into three factions in step d), wherein the fine fraction and the coarse fraction are removed or recycled and the middle fraction between 80 and 2000 µm is optionally rounded in a further step.

5. A process according to one or more of claims 1 to 4, **characterised in that** the rounding step as defined in e) is carried out with the removal of the dust fraction.

6. A process according to one or more of claims 1 to 5, **characterised in that** the product obtained after step d) or optionally the product formed after rounding as defined in step e) is coated with processing adjuvants.

7. A process according to one or more of claims 1 to 6, **characterised in that** water, salts from the group comprising phosphates, silicates, aluminates and borates, polysaccharides and cellulose derivatives, oils from biological cultivation, refined crude oils based on paraffins and/or napthenes, synthetically produced oils, alkylphenols, glycols, polyethers, polyglycols, polyglycol derivatives, protein fatty acid condensation products, alkylbenzene sulphonates, alkylnaphthalene sulphonates, lignin sulphonate, sulphated polyglycol ethers, melamine formaldehyde condensates, naphthalene formaldehyde condensates, gluconic acid, polyhydroxy compounds or aqueous solutions thereof are used as processing adjuvants.

8. A process according to one or more of claims 1 to 7, **characterised in that** the processing adjuvants are used in amounts from 0.001 to 10 percent by weight with respect to the pigment used.

9. A process according to one or more of claims 1 to 8, **characterised in that** the pressing or briquetting step b) is effected via a roll press or die press and at linear forces of 0.1 to 50 kN/cm, preferably 0.1 to 20 kN/cm.

10. A process according to one on more of claims 1 to 9, **characterised in that** the comminution step c) is effected by sieving through a passing sieve with a mesh aperture from 0.5 to 4 mm, preferably from 0.5 to 2.5 mm, most preferably from 1 to 2 mm.

11. A process according to one or more of claims 1 to 10, **characterised in that** the rounding step as defined in e) is effected on a rotary table, in a rotary drum, in a sieving installation or in a fluidised bed.

12. A process for colouring building materials with carbon black pigments, **characterised in that** briquetted or pressed granules produced according to claims 1 to 11 are mixed with the building materials in an amount of 0.1 to 10 % by weight with respect to cement.

13. A process for colouring organic media with carbon black pigments, **characterised in that** briquetted or pressed granules produced according to claims 1 to 11 are mixed with the organic media in an amount of 0.1 to 10 % by weight with respect to the organic medium.

## Revendications

1. Procédé de préparation de granulés de pigments de noir de carbone par briquetage ou compaction, avec des auxiliaires, **caractérisé en ce que**
a) un ou plusieurs pigments de noir de carbone sont mélangés à un ou plusieurs auxiliaires favorables au traitement ;
b) ce mélange est soumis à une étape de compaction ou de briquetage ;
c) ce produit compacté ou briqueté est broyé ;
d) le produit broyé est divisé en deux ou plusieurs fractions, et
e) la fraction, dans laquelle au moins 85% des particules sont plus grandes que 80 µm, de préférence plus grandes que 100 µm, ou se situent dans l'intervalle allant de 80 à 2000 µm, de préférence de 100 à 1000 µm, est prélevée comme produit et le cas échéant, est arrondie dans une étape ultérieure, la ou les autres fractions sont exclues du processus ou recyclées.

2. Procédé suivant la revendication 1, **caractérisé en ce que** avant l'étape c), le produit compacté ou briqueté de b) est divisé en deux fractions, la grosse fraction, dans laquelle au moins 85% des particules sont plus grandes que 500 µm, de préférence plus grandes que 600 µm, est introduite dans l'étape c) et broyée, et la fraction fine, est introduite dans l'étape d) pour être divisée dans l'étape d) à l'écart de ou avec le produit de l'étape c).

3. Procédé suivant la revendication 1, **caractérisé en ce que** le produit broyé en d) est divisé en deux fractions, la partie fine, inférieure à 80 µm, étant exclue ou recyclée dans le processus et la grosse fraction, plus grande que 80 µm, étant le cas échéant, arrondie dans une étape ultérieure.

4. Procédé suivant la revendication 1, **caractérisé en ce que** le produit broyé est divisé en trois fractions à l'étape d), la partie fine et la partie grosse étant exclues ou recyclées, et la fraction moyenne allant de 80 à 2000 µm étant les cas échéant, arrondie dans une autre étape.

5. Procédé suivant l'une ou plusieurs des revendications 1 à 4, **caractérisé en ce que** l'étape d'arrondissage en e) est réalisée avec élimination de la partie poussiéreuse.

6. Procédé suivant l'une ou plusieurs des revendications 1 à 5, **caractérisé en ce que** le produit obtenu après l'étape d) ou le cas échéant, le produit formé après l'arrondissage à l'étape e) est enduit d'auxiliaires.

7. Procédé suivant l'une ou plusieurs des revendications 1 à 6, **caractérisé en ce que** l'on met en oeuvre comme auxiliaire, de l'eau, des sels du groupe des phosphates, silicates, aluminates, borates, polysaccharides et dérivés de cellulose, huiles naturelles, huiles minérales raffinées à base paraffinique et/ou naphténique, huiles synthétiques, alcoylphénols, glycols, polyéthers, polyglycols, dérivés de polyglycol, produits de condensation protéine-acide gras, alcoylbenzènesulfonates, alcoylnaphtalènesulfonates, sulfonates de lignine, polyglycoléthers sulfatés, condensats mélamine-formaldéhyde, condensats naphtalène-formaldéhyde, acide gluconique, composés polyhydroxylés ou des solutions aqueuses de ceux-ci.

8. Procédé suivant l'une ou plusieurs des revendications 1 à 7, **caractérisé en ce que** l'auxiliaire est mis en oeuvre en une quantité allant de 0,001 à 10% en poids, sur base du pigment mis en oeuvre.

9. Procédé suivant l'une ou plusieurs des revendications 1 à 8, **caractérisé en ce que** l'étape de compaction ou de briquetage b) est réalisée sur une presse à cylindres ou une presse à matrice avec une force linéaire allant de 0,1 à 50 kN/cm, de préférence de 0,1 à 20 kN/cm.

10. Procédé suivant l'une ou plusieurs des revendications 1 à 9, **caractérisé en ce que** l'étape de broyage c) est réalisée par tamisage sur un tamis ayant une largeur de maille allant de 0,5 à 4 mm, de préférence de 0,5 à 2,5 mm, de manière particulièrement préférée, de 1 à 2 mm.

11. Procédé suivant l'une ou plusieurs des revendications 1 à 10, **caractérisé en ce que** l'étape d'arrondissage en e) est réalisée sur un plateau tournant, dans un tambour rotatif, dans un appareil tamiseur ou dans un lit fluidisé.

12. Procédé de coloration de matériaux de construction avec des pigments de noir de carbone, **caractérisé en ce que** les granulés préparés par briquetage ou par compaction suivant les revendications 1 à 11, sont mélangés au matériau de construction en une quantité allant de 0,1 à 10% en poids, sur base du ciment.

13. Procédé de coloration de milieux organiques avec des pigments de noir de carbone, **caractérisé en ce que** les granulés préparé par briquetage ou par compaction suivant les revendications 1 à 11, sont mélangés au milieu organique en une quantité allant de 0,1 à 10% en poids, sur base du milieu organique.
